# EUROPÄISCHE PATENTSCHRIFT

(11) **EP 3 238 338 B1**
(45) Veröffentlichungstag und Bekanntmachung des Hinweises auf die Patenterteilung: **13.10.2021**
(21) Anmeldenummer: 15819805.1
(22) Anmeldetag: 16.12.2015
(51) Int. Cl.: H02P 9/10, F01D 21/02, H02P 9/02, F01D 17/06, H02J 3/00

(54) **VERFAHREN SOWIE VORRICHTUNG ZUM ÜBERWACHEN DES BETRIEBES EINER STROMERZEUGUNGSANLAGE**
METHOD AND APPARATUS FOR MONITORING THE OPERATION OF A POWER GENERATING INSTALLATION
PROCÉDÉ ET DISPOSITIF DE SURVEILLANCE DU FONCTIONNEMENT D'UNE INSTALLATION DE PRODUCTION D'ÉLECTRICITÉ

(30) Priorität: 03.02.2015 DE 102015201836
(43) Veröffentlichungstag der Anmeldung: 01.11.2017
(73) Patentinhaber: Siemens Energy Global GmbH & Co. KG, 81739 München (DE)
(72) Erfinder: WALL, Dirk, 45473 Mülheim (DE)
(86) Internationale Anmeldenummer: PCT/EP2015/079982
(87) Internationale Veröffentlichungsnummer: WO 2016/124286

(56) Entgegenhaltungen:
- EP-A1- 0 483 570
- EP-A1- 2 423 464
- EP-A2- 1 492 222

## Beschreibung

### Verfahren sowie Vorrichtung zum Überwachen des Betriebes einer Stromerzeugungsanlage

Die Erfindung betrifft ein Verfahren zum Überwachen des Betriebes einer Stromerzeugungsanlage, die wenigstens einen Generator umfasst, der von einer rotierenden Maschine angetrieben wird, um ein elektrisches Netz mit Strom zu speisen, bei dem
- Werte eines Betriebsparameter des Generators und/oder der rotierenden Maschine erfasst und gespeichert werden,
- ermittelt wird, ob der Wert des Betriebsparameters an vorgegebenen Prüfzeitpunkten außerhalb eines zulässigen Bereichs liegt.

Darüber hinaus betrifft die Erfindung eine Vorrichtung zum Überwachen des Betriebes einer Stromerzeugungsanlage, die wenigstens einen Generator umfasst, der von einer rotierenden Maschine angetrieben wird, um ein elektrisches Netz mit Strom zu speisen, umfassend
- Erfassungsmittel, welche ausgebildet sind, um den Wert eines Betriebsparameter des Generators und/oder der rotierenden Maschine zu erfassen, und
- eine Auswerteeinrichtung, welche ausgebildet ist, um von den Erfassungsmitteln Werte des Betriebsparameters übergeben zu bekommen und zu speichern und zu ermitteln, ob der Wert des Betriebsparameters an vorgegebenen Prüfzeitpunkten innerhalb oder außerhalb eines zulässigen Bereichs liegt.

Aus dem Stand der Technik sind Stromerzeugungsanlagen, mittels derer zur Bereitstellung von Strom mechanische Energie in elektrische umgewandelt werden kann, bekannt. Für die Energieumwandlung umfassen derartige Anlagen wenigstens einen Generator, welcher von einer oder mehreren rotierenden Maschinen, zum Beispiel einem Verbrennungsmotor oder einer Gasturbine, zur Stromerzeugung angetrieben wird. Die mittels der Stromerzeugungsanlage bereitgestellte elektrische Energie wird in ein elektrisches Verbrauchernetz, welches mit der Anlage verbunden ist, eingespeist. Die Einspeisung erfolgt dabei bedarfsgerecht, das heißt, im normalen Betrieb entspricht die elektrische Leistung, welche von der Stromerzeugungsanlage bereitgestellt wird der von dem elektrischen Netz abgefragten Last. Die den Generator antreibende Rotationsmaschine dreht sich in diesem Falle im Wesentlichen mit einer konstanten Rotationsgeschwindigkeit.

Tritt plötzlich eine starke Änderung der verbraucherseitig abgefragten Last auf, so muss in der Regel durch geeignete Reglungsmaßnahmen der Betrieb der Stromerzeugungsanlage angepasst werden. Bricht zum Beispiel die verbraucherseitige Last plötzlich ein, weil große Verbraucher oder ganze Teile des elektrischen Netzes abgeschaltet werden, kann die zugeführte mechanische Energie nicht mehr in gleichem Maße in elektrische Energie umgewandelt werden, und infolge dessen beginnen alle rotierenden Bauteile der Stromerzeugungsanlage aufgrund ihrer innenwohnenden Trägheitsmomente zu beschleunigen. Ein derartiger plötzlicher Einbruch der verbraucherseitigen Last wird auch als Lastabwurf bezeichnet.

Um den Betrieb der Stromerzeugungsanlage zu überwachen, wird ein oder werden mehrere Betriebsparameter des Generators und/oder der rotierenden Maschine erfasst und kontinuierlich bzw. in vorgegebenen Zeitabständen überprüft, ob sie innerhalb oder außerhalb eines zulässigen Bereiches liegen. Überschreitet zum Beispiel die Drehzahl von einer oder mehreren der rotierenden Komponenten der Anlage einen zulässigen Maximalwert, so sind aus Sicherheitsgründen Gegenmaßnahmen zu ergreifen. Es kann zum Beispiel die zugeführte Energie in Form der Brennstoffzufuhr zu einer Gasturbine gedrosselt werden. Im Extremfall sind die rotierenden Komponenten vollständig abzuschalten.

Insbesondere eine vollständige Abschaltung von Komponenten der Stromerzeugungsanlage als Gegenmaßnahme ist mit einem erheblichen Aufwand verbunden. Im Anschluss an eine vollständige Abschaltung muss die Stromerzeugungsanlage neu gestartet, hochgefahren und mit der Frequenz des zu speisenden elektrischen Netzes synchronisiert werden.

Dabei besteht das Problem, dass die Gegenmaßnahmen zum Teil auch in Betriebssituationen eingeleitet werden, in denen nur vorübergehende Leistungseinbrüche vorliegen, die über einen gewissen Zeitraum ohne Gegenmaßnahmen in Kauf genommen werden können oder gefordert sind. Werden derartige Leistungsschwankungen fehlerhaft als Lastabwurf erkannt und entsprechende Gegenmaßnahmen eingeleitet, so wird grundlos ein erheblicher Aufwand verursacht.

Im Lichte dessen sind die Bestrebungen im Stand der Technik dahingegangen, die bekannten Verfahren zur Überwachung des Betriebes einer Stromerzeugungsanlage zu verbessern.

Aus der DE 103 28 932 A1 beispielsweise geht ein Verfahren hervor, bei dem die Wechselfrequenz der mit dem Generator einer Stromerzeugungsanlage bereitgestellten elektrischen Spannung als Betriebsparameter erfasst und mit einem zulässigen Maximalwert verglichen wird. Die Wechselfrequenz der Spannung ist direkt proportional zur Rotationsgeschwindigkeit des Generators. Zusätzlich zu der Wechselfrequenz wird eine zweite Betriebsgröße erfasst, die von dem Trägheitsmoment der Rotationsmaschine abhängt. Hierbei kann es sich um die zeitliche Änderung der Wechselfrequenz handeln. Nur für den Fall, dass beide Betriebsgrößen oberhalb eines jeweils zulässigen Maximalwertes liegen, wird geschlossen, dass ein Lastabwurf vorliegt und es werden entsprechende Gegenmaßnahmen eingeleitet. Das offenbarte Verfahren zielt demgemäß darauf ab, bei einem plötzlichen netzseitigen Lasteinbruch neben der Rotationsgeschwindigkeit des Generators auch dessen Beschleunigung zu betrachten und als weiteres Indiz für das Bestehen eines Lastabwurfes heranzuziehen. Da sich beim tatsächlichen Vorliegen eines Lastabwurfes ein charakteristischer Beschleunigungswert einstellt, kann dieser Parameter als zusätzliches Bewertungskriterium dienen.

In der EP 2 423 464 A1 ist ein Verfahren zum Überwachen des Betriebes einer Stromerzeugungsanlage beschrieben. Die Stromerzeugungsanlage umfasst wenigstens einen Generator, der von einer rotierenden Maschine angetrieben wird, um ein elektrisches Netz mit Strom zu speisen, bei dem eine Ist-Leistung erfasst und gespeichert wird und ermittelt wird, ob dieser Wert des Betriebsparameters an vorgegebenen Prüfzeitpunkten außerhalb eines zulässigen Bereichs liegt.

Die bekannten Verfahren haben sich grundsätzlich bewährt, um den Betrieb von Stromerzeugungsanlagen zu überwachen und Lastabwürfe zu erkennen. Es besteht jedoch Bedarf an weiteren verbesserten Verfahren, die eine besonders zuverlässige Unterscheidung verschiedener Betriebszustände und -störungen ermöglichen.

Ausgehend von dem vorgenannten Stand der Technik ist es daher eine Aufgabe der vorliegenden Erfindung, ein Verfahren zum Überwachen des Betriebes einer Stromerzeugungsanlage anzugeben, mittels dem Lastabwürfe besonders zuverlässig identifiziert und von anderen Betriebszuständen bzw. -störungen unterschieden werden können. Darüber hinaus ist es eine Aufgabe der vorliegenden Erfindung eine Vorrichtung anzugeben, mittels derer ein derartiges Verfahren durchgeführt werden kann.

Bei einem Verfahren der eingangs genannten Art wird diese Aufgabe dadurch gelöst, dass
- in dem Fall, dass an zwei unmittelbar aufeinanderfolgenden Prüfzeitpunkten der Wert des Betriebsparameters außerhalb des zulässigen Bereichs liegt auf einen möglichen Störfall geschlossen und zusätzlich überprüft wird, ob sich der Wert des Betriebsparameters in einem vorgegebenen Prüfintervall, welches zwischen den beiden unmittelbar aufeinanderfolgenden Prüfzeitpunkten liegt und sich insbesondere bis zu dem späteren der beiden Prüfzeitpunkte erstreckt, dem zulässigen Bereich annähert, und
- wenn sich der Wert des Betriebsparameters dem zulässigen Bereich nicht annähert darauf geschlossen wird, dass ein Störfall vorliegt.

Im Rahmen des erfindungsgemäßen Verfahrens wird im Betrieb der Stromerzeugungsanlage zu deren Überwachung wenigstens ein Betriebsparameter des Generators bzw. der rotierenden Maschine erfasst und an vorgegebenen Prüfzeitpunkten mit einem vorgegebenen Grenzwert verglichen. Für den Fall, dass der Wert des bzw. der überwachten Betriebsparameter(s) an zwei unmittelbar aufeinanderfolgenden Prüfzeitpunkten das vorgegebene Grenzwertkriterium verletzt, wird davon ausgegangen, dass ein möglicher Störfall, also eine Abweichung vom Normalbetrieb der Anlage vorliegt.

Der Grundgedanke der vorliegenden Erfindung besteht nun mit anderen Worten darin, dass in einem solchen Fall zusätzlich überprüft wird, wie sich der Betriebsparameter vor dem zweiten dieser beiden unmittelbar aufeinanderfolgenden Prüfzeitpunkte verhalten hat. Konkret wird überprüft, ob sich der Betriebsparameter in einem Prüfintervall, welches zwischen diesen beiden Prüfzeitpunkten liegt, an denen die Grenzwertverletzung zweimal hintereinander registriert wurde, bereits wieder in einem Erholungszustand befindet, er sich also bereits wieder dem zulässigen Bereich annähert. Hierfür kann der Gradient des Betriebsparameters an einem oder an mehreren Zeitpunkten in dem Prüfintervall betrachtet werden. Für die erfindungsgemäße zusätzliche Überprüfung, ob eine Annäherung an den zulässigen Bereich vorliegt, kann dabei auf bereits erfasste und gespeicherte Werte des Betriebsparameters zurückgegriffen werden.

Ergibt die zusätzliche Überprüfung, dass eine Erholung des Betriebsparameters in dem betrachteten Prüfintervall nicht stattfindet, sich dieser also nicht bereits wieder dem zulässigen Bereich annähert, so wird darauf geschlossen, dass ein Störfall, insbesondere ein Lastabwurf vorliegt.

Ergibt die erfindungsgemäße zusätzliche Überprüfung hingegen, dass eine Erholung des überwachten Betriebsparameters in dem betrachteten Prüfintervall vorliegt, kann davon ausgegangen werden, dass sich der Betriebsparameter in absehbarer Zeit wieder in den zulässigen Bereich bewegen wird. In einem solchen Falle wird nicht davon ausgegangen, dass ein Lastabwurf vorliegt. Die Störfallerkennung, insbesondere die Lastabwurferkennung, kann in einem solchen Fall zurückgesetzt werden und auf das Einleiten von Gegenmaßnahmen wird verzichtet. Natürlich ist es möglich, dass in einem solchen Fall weitere Überprüfungsschritte durchgeführt werden, um den Betriebszustand genauer zu analysieren.

Durch die erfindungsgemäße zusätzliche Überprüfung kann besonders zuverlässig zwischen Lastabwürfen und anderen vom Normalbetrieb abweichenden Betriebszuständen, in denen Leitungsschwankungen auftreten, die länger andauern als die jeweils zwischen zwei Prüfzeitpunkten liegende Zeitspanne, unterschieden werden. Dabei hat sich gezeigt, dass durch das erfindungsgemäße Verfahren insbesondere erreicht wird, dass die Leistungsschwankungen, die im Rahmen der Behebung eines Kurzschlusses auftreten, nicht fälschlicher Weise als Lastabwurf erkannt werden. Gerade bei der Behebung eines Kurzschlusses kann es nämlich vorkommen, dass beispielsweise die Leistung und/oder Drehzahl des Generators an zwei unmittelbar aufeinanderfolgenden Prüfzeitpunkten außerhalb des zulässigen Bereiches liegt, sich der Betriebsparameter jedoch in einem vor dem zweiten der beiden Prüfzeitpunkte liegenden Zeitintervall bereits wieder erholt. Dies wird unter Anwendung des erfindungsgemäßen Verfahrens erkannt und es kann zuverlässig verhindert werden, dass in einem solchen Falle unnötige Gegenmaßnahmen eingeleitet werden.

Im Ergebnis wird ein besonders sicherer sowie effizienter Betrieb einer Stromerzeugungsanlage ermöglicht.

Der erfindungsgemäß als Prüfintervall betrachtete zurückliegende Zeitabschnitt erstreckt sich in zweckmäßiger Ausgestaltung bis kurz vor oder bis zu dem zweiten der beiden Prüfzeitpunkte, an denen die Verletzung des Grenzwertkriteriums registriert wurde. So kann für die zusätzliche Überprüfung das Verhalten des Betriebsparameters in einem Bereich betrachtet werden, der kurz vor dem zweiten der beiden Prüfzeitpunkte liegt.

Ferner liegt zwischen jeweils zwei der im Rahmen des erfindungsgemäßen Verfahrens betrachteten Prüfzeitpunkte zweckmäßiger Weise eine aus Sicherheitsgründen bzw. Netzanforderungen vorgegeben maximale Zeitspanne, die beispielsweise einige hundert Millisekunden betragen kann.

So ist gemäß einer Ausführungsform des erfindungsgemäßen Verfahrens vorgesehen, dass Prüfzeitpunkte betrachtet werden, zwischen denen jeweils ein Zeitintervall im Bereich von 100 bis 500 Millisekunden, insbesondere von 100 bis 350 Millisekunden, bevorzugt von 200 bis 300 Millisekunden liegt.

Es kann beispielsweise durch Netzanforderungen vorgegeben sein, dass alle paarhundert Millisekunden das Einhalten eines Grenzwertkriteriums in Bezug auf einen Betriebsparameter überprüft wird. Zur Befolgung einer solchen Vorgabe können im Rahmen des erfindungsgemäßen Verfahrens dann beispielsweise Prüfzeitpunkte betrachtet werden, die entsprechend zeitlich separiert sind.

Die Erfassung des Betriebsparameters erfolgt zweckmäßiger Weise mit einer insbesondere deutlich höheren Auflösung als der Vergleich der erfassten Werte mit dem Grenzwert an den Prüfzeitpunkten. Die Erfassung des Wertes des Betriebsparameters kann beispielsweise kontinuierlich erfolgen oder zu vorgegebenen Erfassungszeitpunkten, die zeitlich dichter liegen als die Prüfzeitpunkte. Die Auflösung der Erfassung kann zum Beispiel derart gewählt sein, dass zwischen zwei Prüfzeitpunkten jeweils mehrere zehn oder auch mehrere hundert Erfassungszeitpunkte liegen.

Gemäß einer weiteren Ausführungsform des Verfahrens wird ein Prüfintervall betrachtet, dessen Länge maximal der Hälfte, insbesondere maximal einem Viertel, bevorzugt maximal einem Zehntel und besonders bevorzugt maximal einem Zwanzigstel desjenigen Zeitintervalls entspricht, welches durch die beiden unmittelbar aufeinanderfolgenden Prüfzeitpunkte, an denen der Wert des Betriebsparameters außerhalb des zulässigen Bereiches liegt, definiert ist.

Es kann beispielsweise ein Prüfintervall (Δtₚ) betrachtet werden, welches eine Länge im Bereich von 5 bis 50 Millisekunden, insbesondere 5 bis 30 Millisekunden, bevorzugt 5 bis 15 Millisekunden aufweist. Diese Werte haben sich als geeignet erwiesen.

Ob in dem Prüfintervall eine Annäherung des Betriebsparameters an den zulässigen Bereich vorliegt, kann zum Beispiel erfindungsgemäß ermittelt werden, indem der Wert des Betriebsparameters zu dem zweiten der beiden Prüfzeitpunkte mit dem Wert des Betriebsparameters an einem Zeitpunkt innerhalb des Prüfintervalls verglichen wird, an dem ein Messwert erfasst wurde. Es kann auch der an mehreren Erfassungszeitpunkten innerhalb des Prüfintervalls erfasste Wert des Betriebsparameters betrachtet werden, um zu ermitteln, ob sich der Betriebsparameter dem zulässigen Bereich wieder annähert oder nicht.

Eine weiter Ausführungsform des erfindungsgemäßen Verfahrens zeichnet sich ferner dadurch aus, dass die Differenz zwischen dem Wert des Betriebsparameters an dem späteren der beiden Prüfzeitpunkte, an denen der Wert des Betriebsparameters außerhalb des zulässigen Bereiches liegt, und dem Wert des Betriebsparameters an einem Zusatzprüfzeitpunk, der innerhalb des Prüfintervalls liegt, ermittelt wird und aus dem Vorzeichen der Differenz darauf geschlossen wird, ob sich der Wert des Betriebsparameters in dem Prüfintervall dem zulässigen Bereich annähert oder nicht.

Je nachdem, ob der zulässige Bereich oberhalb oder unterhalb des nicht zulässigen Bereiches liegt, also je nachdem, ob ein oberer oder unterer Grenzwert zu betrachten ist, wird aus einem positiven Vorzeichen auf das Vorliegen einer Annäherung geschlossen oder auf das Vorliegen keiner Annäherung. Hat die Differenz von den Leistungswerten, die an dem späteren der beiden Prüfzeitpunkte und an dem vor diesem liegenden Zusatzprüfzeitpunkt erfasst wurde, ein positives Vorzeichen, so wird daraus geschlossen, dass eine Annäherung an den zulässigen Bereich vorliegt, der durch einen unteren Leistungs-Grenzwert begrenzt wird. Im Falle der Drehzahl wäre es genau umgekehrt, da der zulässige Drehzahlbereich unterhalb des nicht zulässigen Drehzahlbereiches liegt.

Dabei kann insbesondere vorgesehen sein, dass ein Zusatzprüfzeitpunkt betrachtet wird, der 5 bis 50 Millisekunden, insbesondere 5 bis 30 Millisekunden, bevorzugt 5 bis 15 Millisekunden vor dem späteren der beiden unmittelbar aufeinanderfolgenden Prüfzeitpunkte liegt, an denen der Wert des Betriebsparameters außerhalb des zulässigen Bereichs liegt.

In Weiterbildung des erfindungsgemäßen Verfahrens kann ferner vorgesehen sein, dass der Betrag der Differenz zwischen dem Wert des Betriebsparameters an dem späteren der beiden Prüfzeitpunkte, an denen der Wert des Betriebsparameters außerhalb des zulässigen Bereiches liegt, und dem Wert des Betriebsparameters an einem Zusatzprüfzeitpunkt, der innerhalb des Prüfintervalls liegt, ermittelt wird und der Betrag der Differenz mit einem vorgegebenen Maximalwert verglichen wird, wobei für den Fall, dass der Betrag den Maximalwert überschreitet daraus geschlossen wird, dass ein Störfall vorliegt.

Diese Ausgestaltung ermöglicht es, dass zusätzlich zu dem Vorzeichen der Differenz auch betrachtet wird, wie weit die Werte des Betriebsparameters zu dem späteren der beiden Zeitpunkte und zu dem Zusatzprüfzeitpunkt auseinander liegen. Ist der Abstand zu groß, kann es erforderlich sein Gegenmaßnahmen einzuleiten, daher wird der Betrag der Differenz mit einem Maximalwert verglichen und für den Fall einer Überschreitung wird von einem Störfall ausgegangen.

Für die Differenzbildung wird von den gespeicherten Betriebsparameterwerten derjenige, der an dem Zusatzprüfzeitpunkt erfasst wurde und derjenigen, der an dem zweiten der beiden Prüfzeitpunkte erfasst wurde herangezogen und es wird die Differenz gebildet. Der Zusatzprüfzeitpunkt kann dabei beispielsweise unmittelbar am Anfang des betrachteten Prüfintervalls liegen. Wird zum Beispiel erfindungsgemäß ein Prüfintervall mit einer Länge von 20 Millisekunden betrachtet, welches sich bis unmittelbar zu dem späteren der beiden Prüfzeitpunkte erstreckt, an denen die Grenzwertverletzung registriert wurde, so liegt der Zusatzprüfzeitpunkt 20 Millisekunden vor dem späteren der beiden Prüfzeitpunkte.

Es kann darüber hinaus eine Änderungsrate des Betriebsparameters in dem vorgegebenen Prüfintervall bestimmt werden. Aus dem Vorzeichen der Änderungsrate des Betriebsparameters kann dann darauf geschlossen werden, ob sich der Wert des Betriebsparameters in dem Prüfintervall dem zulässigen Bereich annähert oder nicht.

Gemäß dieser Ausführungsformen wird das Vorzeichen der Steigung des Betriebsparameters an wenigstens einem in dem Prüfintervall liegenden Zeitpunkt bestimmt und es wird aus dem Vorzeichen geschlossen, ob sich der Betriebsparameter wieder dem zulässigen Bereich annähert oder nicht.

Schließlich kann ermittelt werden, ob der Wert der Änderungsrate innerhalb oder außerhalb eines zulässigen Bereiches liegt und es kann auf einen Störfall geschlossen werden, wenn der Wert der Änderungsrate außerhalb des zulässigen Bereiches liegt.

Nähert sich der Wert des Betriebsparameters zwar wieder dem zulässigen Bereich an, geschieht dies jedoch nur sehr langsam kann es sinnvoll sein, den Betrieb der Stromerzeugungsanlage anzupassen. Daher wird gemäß dieser Ausführungsform auf das Vorliegen eines Störfalls geschlossen, wenn die Änderungsrate des Betriebsparameters außerhalb eines zulässigen Bereiches liegt, diese insbesondere einen vorgegebenen Minimalwert unterschreitet.

Die Erfindung sieht weiterhin vor, dass die Differenz zwischen dem Wert des Betriebsparameters an dem späteren der beiden unmittelbar aufeinanderfolgenden Prüfzeitpunkte, an denen der Wert des Betriebsparameters außerhalb des zulässigen Bereiches liegt, und einem Betriebsparameter-Sollwert ermittelt wird und auf einen Störfall geschlossen wird, wenn der Betrag der Differenz einen vorgegebenen Wert überschreitet. Gemäß dieser Ausführungsform wird zusätzlich ermittelt, wie groß der Abstand des Wertes des Betriebsparameters, welcher an dem späteren der beiden Prüfzeitpunkte erfasst wurde zu einem Betriebsparameter-Sollwert ist. Ist der Abstand größer als ein vorgegebener Maximalwert kann es sinnvoll oder erforderlich sein, den Betrieb der Stromerzeugungsanlage anzupassen.

Im Rahmen der Durchführung des erfindungsgemäßen Verfahrens kann als Betriebsparameter des Generators beispielsweise die Leistung des Generators und/oder die Drehzahl des Generators messtechnisch erfasst und gespeichert werden und/oder es kann als Betriebsparameter der rotierenden Maschine das Drehmoment der rotierenden Maschine erfasst und gespeichert werden. Andere Betriebsparamater können alternativ oder zusätzlich erfasst werden.

Dabei kann der bzw. können die Betriebsparameter jeweils unmittelbar mit geeigneten Mitteln messtechnisch erfasst werden oder es kann eine Größe messtechnisch erfasst werden, aus welcher der zu betrachtende Betriebsparameter ermittelt werden kann. Beispielsweise kann die Drehzahl des Generators mittels geeigneter Sensoren direkt messtechnisch erfasst werden oder es wird die Wechselfrequenz der von dem Generator erzeugten Wechselspannung gemessen, welche direkt proportional zu der Rotationsgeschwindigkeit des Generators ist. Die Leistung des Generators kann beispielsweise erfasst werden, indem die Spannung und der Strom des Generators messtechnisch detektiert und miteinander multipliziert werden.

Prinzipiell ist es möglich, dass im Rahmen des erfindungsgemäßen Verfahrens nur ein Betriebsparameter des Generators oder der rotierenden Maschine erfasst, gespeichert und für die erfindungsgemäße Überwachung herangezogen wird. Alternativ können auch mehrere Betriebsparameter des Generators und/oder der rotierenden Maschine erfasst werden. Beispielsweise kann sowohl die Drehzahl als auch die Leistung des Generators direkt gemessen oder aus einer direkt gemessenen Größe abgeleitet werden. Mit der Erfassung des Betriebsparameters ist sowohl eine direkte Messung des Parameters selber gemeint als auch die direkte Messung eines anderen Wertes, aus dem dann der zu betrachtende Betriebsparameter abgeleitet wird.

Werden mehrere Betriebsparameter, insbesondere von Generator und/oder rotierender Maschine erfasst, kann die erfindungsgemäße zusätzliche Überprüfung, ob sich der Betriebsparameter in dem vorgegebenen Prüfintervall dem zulässigen Bereich annähert oder nicht nur für einen der Betriebsparameter, für mehrere dieser oder auch für alle durchgeführt werden.

So ist es möglich, dass die Leistung und Drehzahl des Generators erfasst und beide Parameter zu den vorgegebenen Prüfzeitpunkten mit entsprechenden Grenzwerten verglichen werden, um zu ermitteln, ob diese Parameter innerhalb oder außerhalb des jeweils zulässigen Bereiches liegen. In dem Fall, dass an zwei unmittelbar aufeinanderfolgenden Prüfzeitpunkten von beiden Parametern das Grenzwertkriterium verletzt wird, diese also nicht im zulässigen Bereich liegen, kann die erfindungsgemäße zusätzliche Überprüfung, ob eine Annäherung an den zulässigen Bereich in dem vorgegebenen Prüfintervall vorliegt nur für einen der beiden Parameter durchgeführt werden oder auch für beide.

Bei der rotierenden Maschine, die den Generator antreibt handelt es sich beispielsweise um eine Gasturbine.

Werden in einer Stromerzeugungsanlage mehrere Generatoren betrieben, die jeweils von einer oder mehreren rotierenden Maschine angetrieben werden, so werden im Rahmen der Durchführung des erfindungsgemäßen Verfahrens in vorteilhafter Ausgestaltung Betriebsparameter von jedem Generator und/oder von jeder rotierenden Maschine erfasst und ausgewertet.

Die vorstehende Aufgabe wird ferner bei einer Vorrichtung der eingangs genannten Art dadurch gelöst, dass die Auswerteeinrichtung derart ausgebildet ist, dass mit dieser
- in dem Fall, dass an zwei unmittelbar aufeinanderfolgenden Prüfzeitpunkten der Wert des Betriebsparameters außerhalb des zulässigen Bereichs liegt auf einen möglichen Störfall geschlossen und zusätzlich überprüft werden kann, ob sich der Wert des Betriebsparameters in einem vorgegebenen Prüfintervall, welches zwischen den beiden unmittelbar aufeinanderfolgenden Prüfzeitpunkten liegt und sich insbesondere bis zu dem späteren der beiden Prüfzeitpunkte erstreckt, dem zulässigen Bereich annähert, und
- wenn sich der Wert des Betriebsparameters dem zulässigen Bereich nicht annähert darauf geschlossen wird, dass ein Störfall vorliegt.

Eine Vorrichtung mit einer auf diese Weise ausgestalteten Auswerteeinrichtung eignet sich, um das erfindungsgemäße Verfahren zum Überwachen des Betriebes einer Stromerzeugungsanlage durchzuführen.

Die erfindungsgemäße Vorrichtung kann beispielsweise als intergraler Bestandteil einer zentralen Steuereinrichtung der Stromerzeugungsanlage ausgebildet sein.

Die Erfassungsmittel sind gemäß einer Ausführungsform derart ausgebildet, dass mit diesen der bzw. die zu betrachtenden Betriebsparameter messtechnisch detektiert werden oder wenigstens eine Größe, aus welcher der bzw. die zu betrachtenden Betriebsparameter abgeleitet werden können, messtechnisch detektiert werden kann.

Weitere Merkmale und Vorteile der vorliegenden Erfindung werden anhand der nachfolgenden Beschreibung einer Ausführungsform des erfindungsgemäßen Verfahrens sowie der erfindungsgemäßen Vorrichtung unter Bezugnahme auf die beiliegende Zeichnung deutlich.

Darin zeigt
- Figur 1: in rein schematischer Darstellung einen Generator und eine Gasturbine einer Stromerzeugungsanlage mit einer Vorrichtung zum Überwachen des Betriebes der Stromerzeugungsanlage gemäß einem Ausführungsbeispiel der Erfindung;
- Figur 2: einen Graphen, in dem die Leistung des Generators aus Figur 1 über der Zeit aufgetragen ist; und
- Figur 3: einen Graphen, in dem die Drehzahl des Generators aus Figur 1 über der Zeit aufgetragen ist.

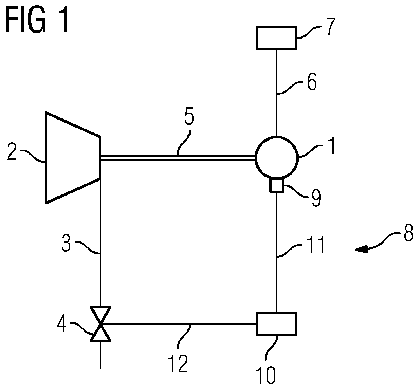

Die Figur 1 zeigt in rein schematischer Darstellung ein Blockschaltbild mit einigen Komponenten einer Stromerzeugungsanlage. Konkret sind in dem Blockschaltbild in Figur 1 ein Generator 1 sowie eine Gasturbine 2 der Stromerzeugungsanlage dargestellt. Die weiteren Komponenten der Stromerzeugungsanlage sind in der Figur 1 nicht gezeigt.

Im Betrieb der Anlage wird der Gasturbine 2 über eine Gaszuführleitung 3, in welcher ein steuerbares Ventil 4 vorgesehen ist, Brennstoff zugeführt. Die Gasturbine 2 wird dadurch in Rotation versetzt und treibt den Generator 1, welcher mit der Gasturbine 2 über eine gemeinsame Welle 5 verbunden ist, zur Stromerzeugung an. Der Generator 1 ist über eine elektrische Leitung 6 mit einem elektrischen Netz 7 verbunden, in welches der von dem Generator 7 erzeugte Strom eingespeist wird.

Es ist ferner eine Vorrichtung 8 zum Überwachen des Betriebes der Stromerzeugungsanlage vorgesehen.

Die Vorrichtung 8 weist Erfassungsmittel 9 auf, mit denen im Betrieb der Stromerzeugungsanlage die Drehzahl sowie die Leistung des Generators 1 als Betriebsparameter erfasst werden. Die Drehzahl des Generators 1 wird konkret erfasst, indem diese mittels eines in der Figur 1 nicht dargestellten geeigneten Sensors der Erfassungsmittel 9 unmittelbar messtechnisch detektiert wird. Die Leistung des Generators 1 wird erfasst, indem mit geeigneten Messeinrichtungen (nicht dargestellt) der Erfassungsmittel 9 der Strom und die Spannung des Generators 1 messtechnisch detektiert werden und aus dem Strom und der Spannung durch Multiplikation dieser Größen die Leistung des Generators 1 ermittelt wird.

Die Vorrichtung 8 weist ferner eine Auswerteeinrichtung 10 auf, die über eine Leitung 11 mit den Erfassungsmitteln 9 und über eine weitere Leitung 12 mit dem steuerbaren Ventil 4 verbunden ist.

Die Auswerteeinrichtung 10 ist ausgebildet, um von den Erfassungsmitteln 9 Werte der Betriebsparameter, also der Leistung und der Drehzahl des Generators 1 übergeben zu bekommen und zu speichern und zu ermitteln, ob die Werte der Betriebsparameter an vorgegebenen Prüfzeitpunkten innerhalb oder außerhalb eines zulässigen Bereiches liegen. Zu diesem Zweck sind in der Auswerteeinrichtung 10 ein maximal zulässiger Drehzahlgrenzwert n_{grenz} und ein minimal zulässiger Leistungs-grenzwert P_{grenz} abgelegt. Die Drehzahl befindet sich im zulässigen Bereich sofern sie unterhalb des Drehzahlgrenzwertes n_{grenz} liegt, und die Leistung ist im zulässigen Bereich sofern sie oberhalb des Leistungsgrenzwertes P_{grenz} liegt. Um ermitteln zu können, ob die Leistung und die Drehzahl in dem zulässigen Bereich liegen oder nicht ist die Auswerteeinrichtung 10 ausgestaltet, um einen Vergleich der erfassten Leistungs- und Drehzahlwerte mit den Grenzwerten durchzuführen.

Die Auswerteeinrichtung 10 kann ferner für den Fall, dass an zwei aufeinanderfolgenden Prüfzeitpunkten die Leistung und die Drehzahl des Generators 1 außerhalb des zulässigen Bereiches liegen ermitteln, ob in einem vor dem späteren der beiden Prüfzeitpunkte liegenden Prüfintervall eine Annäherung der Leistung und der Drehzahl an den zulässigen Bereich vorliegen.

Es sind ferner ein Drehzahl-Sollwert nₛₒₗₗ sowie ein Leistungs-Sollwert Pₛₒₗₗ in der Auswerteeinrichtung 10 abgelegt und die Auswerteeinrichtung kann ermitteln, ob der Betrag der Differenz zwischen dem Wert der Leistung bzw. der Drehzahl, der an dem späteren der beiden Prüfzeitpunkte erfasst wurde und dem Leistungs- bzw. Drehzahl-Sollwert einen vorgegebenen Wert überschreitet.

Schließlich ist die Auswerteeinrichtung 10 derart ausgebildet, dass sie über die Leitung 12 ein geeignetes Steuersignal an das steuerbare Ventil 4 abgeben kann, um die Brennstoffzufuhr zu der Gasturbine 4 zu drosseln, wenn keine Annäherung der Betriebsparameter an den zulässigen Bereich vorliegt und wenn der Betrag der Differenz der Betriebswerte zu dem jeweiligen Sollwert das vorgegebene Maximum überschreitet.

Im Betrieb der Stromerzeugungsanlage wird zu deren Überwachung eine vorteilhafte Ausführungsform des erfindungsgemäßen Verfahrens durchgeführt.

Hierzu werden mit den Erfassungsmitteln 9 der Vorrichtung 8 an vorgegebenen Erfassungszeitpunkten, die jeweils 5 Millisekunden beabstandet sind, die Drehzahl, der Strom und die Spannung messtechnisch detektiert. Aus dem Strom und der Spannung wird die Leistung ermittelt, so dass für jeden Erfassungszeitpunkt, also alle 5 Millisekunden, der aktuelle Wert der Drehzahl sowie der aktuelle Wert der Leistung vorliegen.

Die Leistungs- und Drehzahl-Werte werden, nachdem sie erfasst worden sind, an die Auswerteeinrichtung 10 übergeben und in dieser gespeichert.

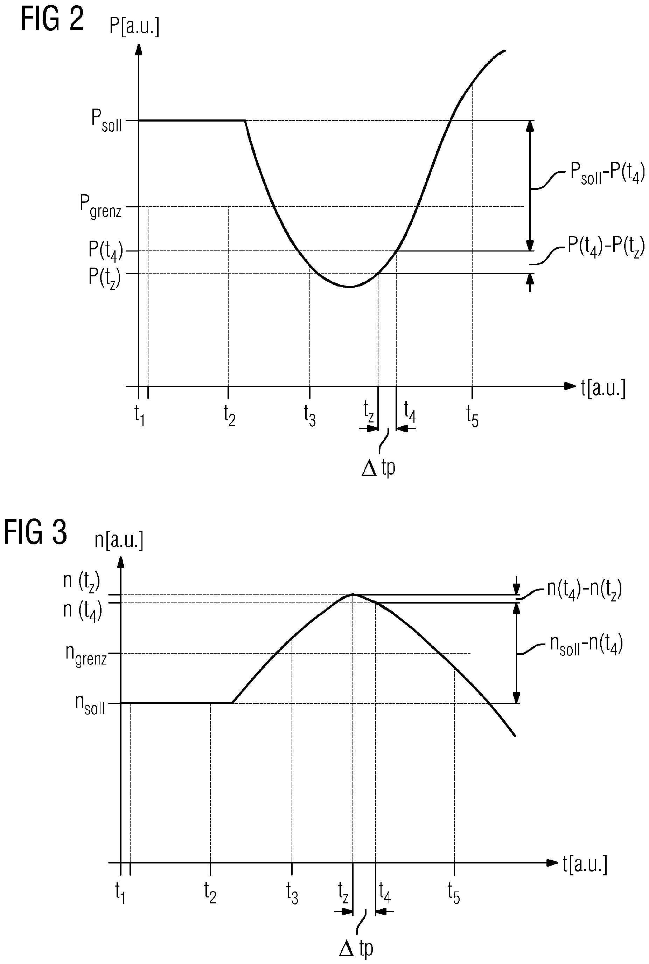

In den Figuren 2 und 3 sind die erfassten Leistungswerte und die erfassten Drehzahlwerte für einen vorgegebenen Zeitraum in einem Graphen dargestellt. Die beiden Achsen in den Graphen sind dimensionslos.

In der Figur 2 sind der Leistungs-Grenzwert P_{grenz} und der Leistungs-Sollwert Pₛₒₗₗ eingezeichnet. In gleicher Weise enthält der Graph in Figur 3 den Drehzahl-Grenzwert n_{grenz} und den Drehzahl-Sollwert nₛₒₗₗ.

Mittels der Auswerteeinrichtung 10 wird ermittelt, ob die Leistungs- und Drehzahlwerte an vorgegebenen Prüfzeitpunkten t₁ bis t₅, die jeweils 250 Millisekunden beabstandet sind, außerhalb des jeweils zulässigen Bereiches liegen. Hierzu werden die Drehzahlwerte und die Leistungswerte, welche an den vorgegebenen Prüfzeitpunkten t₁ bis t₅ erfasst wurden, mit dem jeweiligen Grenzwert verglichen.

Wie aus den Figuren 2 und 3 hervorgeht, liegen die Leistung und die Drehzahl des Generators 1 an den beiden Prüfzeitpunkten t₁ und t₂ im zulässigen Bereich, d.h. die Leistung liegt an diesen beiden Prüfzeitpunkten oberhalb des unteren Leistungs-Grenzwertes P_{grenz} liegt und die Drehzahl unterhalb des oberen Drehzahl-Grenzwertes n_{grenz}.

An dem nächsten Prüfzeitpunkt t₃ und dem übernächsten Prüfzeitpunkt t₄ hingegen liegen die Leistung und die Drehzahl außerhalb des jeweils zulässigen Bereiches. Dies ist vorliegend dadurch bedingt, dass ein Kurzschluss aufgetreten ist, der behoben werden kann, womit die in den beiden Figuren erkennbare Schwankung von Leistung und Drehzahl einhergehen.

Da an den zwei unmittelbar aufeinanderfolgenden Prüfzeitpunkten t₃ und t₄ das Grenzwertkriterium für Leistung und die Drehzahl des Generators 1 verletzt ist, wird davon ausgegangen, dass ein möglicher Störfall vorliegt. Im Rahmen des erfindungsgemäßen Verfahrens wird dann mittels der Auswerteeinrichtung 10 zusätzlich überprüft, wie sich die Leistung und die Drehzahl des Generators 1 in einem vorgegebenen Prüfintervall Δtₚ, welches zwischen den beiden Prüfzeitpunkten t₃ und t₄ liegt und sich bis zu dem späteren der beiden Prüfzeitpunkte, also bis zu dem Prüfzeitpunkt t₄ erstreckt, verhalten haben. Konkret wird überprüft, ob sich der Wert der Leistung und der Wert der Drehzahl in dem vorgegebenen Prüfintervall Δtₚ wieder dem zulässigen Bereich annähern oder nicht.

Bei dem dargestellten Ausführungsbeispiel wird ein Prüfintervall Δtₚ betrachtet, welches eine Länge von 10 Millisekunden hat. Die Länge des Prüfintervalls Δtₚ entspricht demgemäß einem Fünfundzwanzigstel der Länge des zwischen den beiden Prüfzeitpunkten liegenden Intervalls von 250 Millisekunden. Vorliegend wird ermittelt, ob in dem Prüfintervall Δtₚ eine Annäherung der Leistung des Generators 1 an den zulässigen Bereich vorliegt, indem die Differenz zwischen dem Wert der Leistung zu dem späteren der beiden Prüfzeitpunkte, an denen der Wert der Leistung außerhalb des zulässigen Bereiches liegt, also dem Prüfzeitpunkt t₄ und dem Wert der Leistung an einem in dem Prüfintervall Δtₚ liegenden Zusatzprüfzeitpunkt t_{z} ermittelt wird, also P(t₄) - P(t_{z}). Der Zusatzprüfzeitpunkt t_{z} liegt am Anfang des Prüfintervalls Δtₚ. Der Zusatzprüfzeitpunkt t_{z} liegt also 10 Millisekunden vor dem Prüfzeitpunkt t₄.

Das Vorzeichen dieser Differenz ist positiv, woraus geschlossen wird, dass eine Annäherung an den zulässigen Leistung-Bereich vorliegt.

Bei den im Graphen von Figur 3 aufgetragenen Drehzahl-Werten verhält es sich, was das Vorzeichen angeht, genau umgekehrt. Hier wird die Differenz zwischen dem Wert der an dem Prüfzeitpunkt t₄ erfassten Drehzahl und der an dem Zusatzprüfzeitpunkt t_{z} erfassten Drehzahl gebildet, also n(t₄) - n(t_{z}) und diese Differenz hat ein negatives Vorzeichen. Daraus wird in gleicher Weise wie bei der Leistung geschlossen, dass eine Annäherung an den zulässigen Drehzahlbereich vorliegt, der sich unterhalb des nicht zulässigen Bereiches erstreckt.

Es wird ferner der Betrag der Differenz zwischen dem Wert der Leistung des Generators 1 zu dem späteren der beiden Prüfzeitpunkte t₄ und dem Wert der Leistung an dem Zusatzprüfzeitpunkt t_{z} ermittelt, also der Betrag der Differenz P(t₄) - P(t_{z}). Der Betrag dieser Leistungsdifferenz wird mit einem maximalen zulässigen Differenzleistungswert verglichen, welcher in der Auswerteeinrichtung 10 abgelegt ist. Im vorliegenden Falle überschreitet der Betrag der Differenz den vorgegebenen maximal zulässigen Differenzleistungswert nicht. Daraus wird erfindungsgemäß geschlossen, dass ein Störfall nicht vorliegt.

In gleicher Weise wird der Betrag der Differenz zwischen dem Wert der an dem Prüfzeitpunkt t₄ erfassten Drehzahl und der an dem Zusatzprüfzeitpunkt t_{z} erfassten Drehzahl gebildet, also der Betrag der Differenz n(t₄) - n(t_{z}). Der Betrag dieser Differenz wird mit einem vorgegebenen maximalen Drehzahldifferenzwert verglichen, welcher ebenfalls in der Auswerteeinrichtung 10 abgelegt ist. Im vorliegenden Falle ergibt der Vergleich, dass der Betrag der Drehzahldifferenz unterhalb des maximal zulässigen Wertes liegt. Hieraus wird erfindungsgemäß geschlossen, dass kein Störfall vorliegt.

Bei dem dargestellten Ausführungsbeispiel wird weiterhin mittels der Auswerteeinrichtung 10 der Vorrichtung 8 die Differenz zwischen dem Wert der Leistung an dem Prüfzeitpunkt t₄ und dem Leistungs-Sollwert Pₛₒₗₗ, also P(t₄) - Pₛₒₗₗ, sowie die Differenz zwischen dem Wert der Drehzahl an dem Prüfzeitpunkt t₄ und dem Drehzahl-Sollwert nₛₒₗₗ, also n(t₄) - nₛₒₗₗ ermittelt. Der Betrag der jeweiligen Differenz wird mit einem jeweils in der Auswerteeinrichtung 10 abgelegten vorgegebenen maximalen Wert verglichen. Vorliegend ergeben die beiden Vergleiche, dass der vorgegebene Wert nicht überschritten wird. Daraus wird gefolgert, dass kein Störfall vorliegt.

Da die erfindungsgemäße zusätzliche Überprüfung, ob in dem Prüfintervall Δtₚ eine Annäherung der beiden betrachteten Betriebsparameter Leistung und Drehzahl des Generators 1 an den jeweils zulässigen Bereich vorliegt ergeben hat, dass die Annäherung stattfindet und weder der Betrag der Differenz der an dem Zeitpunkt t₄ und dem Zusatzprüfzeitpunkt t_{z} erfassten Leistungswerte noch der Betrag der Differenz der an dem Zeitpunkt t₄ und dem Zusatzprüfzeitpunkt t_{z} erfassten Drehzahlwerte den jeweiligen Maximalwert überschreitet und auch die Differenz der Werte an dem späteren Prüfzeitpunkt t₄ zu dem jeweiligen Sollwert nicht zu groß ist, wird erfindungsgemäß davon ausgegangen, dass kein Störfall, konkret kein Lastabwurf vorliegt.

Daher werden keine Gegenmaßnahmen ergriffen. Die Brennstoffzufuhr zu der Gasturbine 2 wird also nicht über das steuerbare Ventil 4 gedrosselt.

Die Überwachung wird in der zuvor beschriebenen Weise fortgesetzt, wobei an dem nächsten Prüfzeitpunkt t₅ beide Betriebsparameter, wie aus den Figuren 2 und 3 hervorgeht, wieder im zulässigen Bereich liegen. Sollten die Betriebsparameter im Anschluss nochmals an zwei unmittelbar aufeinanderfolgenden Prüfzeitpunkten außerhalb des zulässigen Bereiches liegt, wird erneut zusätzlich überprüft, ob sich die Betriebsparameter in dem Prüfintervall Δtₚ vor dem späteren der beiden Prüfzeitpunkte wieder dem zulässigen Bereich annähert und es werden auf die zuvor beschriebene Weise entsprechende Folgerungen gezogen und ggf. Gegenmaßnahmen ergriffen.

Im Ergebnis wird unter Anwendung des erfindungsgemäßen Verfahrens zuverlässig verhindert, dass der in den Figuren 2 und 3 erkennbare vorübergehende Einbruch der Leistung und der vorübergehende Anstieg der Drehzahl, welche durch die Behebung eines Kurzschlusses verursacht sind, fälschlicherweise als Lastabwurf erkannt werden. So kann ein besonders effizienter sowie sicherer Betrieb der Stromerzeugungsanlage gewährleistet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung wie beansprucht zu verlassen.

## Patentansprüche

1. Verfahren zum Überwachen des Betriebes einer Stromerzeugungsanlage, die wenigstens einen Generator (1) umfasst, der von einer rotierenden Maschine (2) angetrieben wird, um ein elektrisches Netz (7) mit Strom zu speisen, bei dem
- Werte eines Betriebsparameter des Generators (1) und/oder der rotierenden Maschine (2) erfasst und gespeichert werden,
- ermittelt wird, ob der Wert des Betriebsparameters an vorgegebenen Prüfzeitpunkten(t₁ - t₅) außerhalb eines zulässigen Bereichs liegt,
**dadurch gekennzeichnet, dass**
- in dem Fall, dass an zwei unmittelbar aufeinanderfolgenden Prüfzeitpunkten (t₃, t₄) der Wert des Betriebsparameters außerhalb des zulässigen Bereichs liegt auf einen möglichen Störfall geschlossen und zusätzlich überprüft wird, ob sich der Wert des Betriebsparameters in einem vorgegebenen Prüfintervall (Δtₚ), welches zwischen den beiden unmittelbar aufeinanderfolgenden Prüfzeitpunkten (t₃, t₄) liegt und sich insbesondere bis zu dem späteren der beiden Prüfzeitpunkte (t₄) erstreckt, dem zulässigen Bereich annähert, und
- wenn sich der Wert des Betriebsparameters dem zulässigen Bereich nicht annähert, darauf geschlossen wird, dass ein Störfall vorliegt.

2. Verfahren nach Anspruch 1, **dadurch gekennzeichnet, dass** Prüfzeitpunkte (t₁ - t₅) betrachtet werden, zwischen denen jeweils ein Zeitintervall im Bereich von 100 bis 500 Millisekunden, insbesondere von 100 bis 350 Millisekunden, bevorzugt von 200 bis 300 Millisekunden liegt.

3. Verfahren nach Anspruch 1 oder 2, **dadurch gekennzeichnet, dass** ein Prüfintervall (Δtₚ), betrachtet wird, dessen Länge maximal der Hälfte, insbesondere maximal einem Viertel, bevorzugt maximal einem Zehntel und besonders bevorzugt maximal einem Zwanzigstel desjenigen Zeitintervalls entspricht, welches durch die beiden unmittelbar aufeinanderfolgenden Prüfzeitpunkte (t₃, t₄), an denen der Wert des Betriebsparameters außerhalb des zulässigen Bereiches liegt, definiert ist.

4. Verfahren nach einem der vorhergehenden Ansprüche, **dadurch gekennzeichnet, dass** ein Prüfintervall (Δtₚ) betrachtet wird, welches eine Länge im Bereich von 5 bis 50 Millisekunden, insbesondere 5 bis 30 Millisekunden, bevorzugt 5 bis 15 Millisekunden aufweist.

5. Verfahren nach einem der vorhergehenden Ansprüche, **dadurch gekennzeichnet, dass** die Differenz zwischen dem Wert des Betriebsparameters an dem späteren der beiden Prüfzeitpunkte (t₄), an denen der Wert des Betriebsparameters außerhalb des zulässigen Bereiches liegt, und dem Wert des Betriebsparameters an einem Zusatzprüfzeitpunk (t_{z}), der innerhalb des Prüfintervalls (Δtₚ) liegt, ermittelt wird und aus dem Vorzeichen der Differenz darauf geschlossen wird, ob sich der Wert des Betriebsparameters in dem Prüfintervall (Δtₚ) dem zulässigen Bereich annähert oder nicht.

6. Verfahren nach Anspruch 5, **dadurch gekennzeichnet, dass** ein Zusatzprüfzeitpunkt (t_{z}) betrachtet wird, der 5 bis 50 Millisekunden, insbesondere 5 bis 30 Millisekunden, bevorzugt 5 bis 15 Millisekunden vor dem späteren (t₄) der beiden unmittelbar aufeinanderfolgenden Prüfzeitpunkte (t₃, t₄) liegt, an denen der Wert des Betriebsparameters außerhalb des zulässigen Bereichs liegt.

7. Verfahren nach Anspruch 5 oder 6, **dadurch gekennzeichnet, dass** der Betrag der Differenz zwischen dem Wert des Betriebsparameters an dem späteren der beiden Prüfzeitpunkte (t₄), an denen der Wert des Betriebsparameters außerhalb des zulässigen Bereiches liegt, und dem Wert des Betriebsparameters an dem Zusatzprüfzeitpunkt (t_{z}), der innerhalb des Prüfintervalls (Δtₚ) liegt, ermittelt wird und der Betrag der Differenz mit einem vorgegebenen Maximalwert verglichen wird, wobei für den Fall, dass der Betrag den Maximalwert überschreitet daraus geschlossen wird, dass ein Störfall vorliegt.

8. Verfahren nach einem der vorhergehenden Ansprüche, **dadurch gekennzeichnet, dass** eine Änderungsrate des Betriebsparameters in dem vorgegebenen Prüfintervall (Δtₚ) bestimmt wird.

9. Verfahren nach Anspruch 8, **dadurch gekennzeichnet, dass** aus dem Vorzeichen der Änderungsrate des Betriebsparameters darauf geschlossen wird, ob sich der Wert des Betriebsparameters in dem Prüfintervall (Δtₚ) dem zulässigen Bereich annähert oder nicht.

10. Verfahren nach Anspruch 8 oder 9, **dadurch gekennzeichnet, dass** ermittelt wird ob Wert der Änderungsrate innerhalb oder außerhalb eines zulässigen Bereiches liegt und auf einen Störfall geschlossen wird, wenn der Wert der Änderungsrate außerhalb des zulässigen Bereiches liegt.

11. Verfahren nach einem der vorhergehenden Ansprüche, **dadurch gekennzeichnet, dass** als Betriebsparameter des Generators (1) die Leistung des Generators (1) und/oder die Drehzahl des Generators (1) erfasst und gespeichert werden und/oder dass als Betriebsparameter der rotierenden Maschine (2) das Drehmoment der rotierenden Maschine (2) erfasst und gespeichert wird.

12. Verfahren nach einem der vorhergehenden Ansprüche, **dadurch gekennzeichnet, dass** die Differenz zwischen dem Wert des Betriebsparameters an dem späteren (t₄) der beiden unmittelbar aufeinanderfolgenden Prüfzeitpunkte (t₃, t₄), an denen der Wert des Betriebsparameters außerhalb des zulässigen Bereiches liegt, und einem Betriebsparameter-Sollwert ermittelt wird und auf einen Störfall geschlossen wird, wenn der Betrag der Differenz einen vorgegebenen Wert überschreitet.

13. Vorrichtung (8) zum Überwachen des Betriebes einer Stromerzeugungsanlage, die wenigstens einen Generator (1) umfasst, der von einer rotierenden Maschine (2) angetrieben wird, um ein elektrisches Netz (7) mit Strom zu speisen, insbesondere zur Durchführung des Verfahrens nach einem der vorhergehenden Ansprüche, umfassend
- Erfassungsmittel (9), welche ausgebildet sind, um den Wert eines Betriebsparameters des Generators (1) und/oder der rotierenden Maschine (2) zu erfassen, und
- eine Auswerteeinrichtung (10), welche ausgebildet ist, um von den Erfassungsmitteln (9) Werte des Betriebsparameters übergeben zu bekommen und zu speichern und zu ermitteln, ob der Wert des Betriebsparameters an vorgegebenen Prüfzeitpunkten (t₁ - t₅) innerhalb oder außerhalb eines zulässigen Bereichs liegt,
**dadurch gekennzeichnet, dass** die Auswerteeinrichtung (10) derart ausgebildet ist, dass mit dieser
- in dem Fall, dass an zwei unmittelbar aufeinanderfolgenden Prüfzeitpunkten (t₃, t₄) der Wert des Betriebsparameters außerhalb des zulässigen Bereichs liegt auf einen möglichen Störfall geschlossen und zusätzlich überprüft werden kann, ob sich der Wert des Betriebsparameters in einem vorgegebenen Prüfintervall (Δtₚ), welches zwischen den beiden unmittelbar aufeinanderfolgenden Prüfzeitpunkten (t₃, t₄) liegt und sich insbesondere bis zu dem späteren der beiden Prüfzeitpunkte (t₄) erstreckt, dem zulässigen Bereich annähert, und
- wenn sich der Wert des Betriebsparameters dem zulässigen Bereich nicht annähert, darauf geschlossen wird, dass ein Störfall vorliegt.

## Claims

1. Method for monitoring the operation of an electricity generating installation, which comprises at least one generator (1) that is driven by a rotating machine (2) in order to supply electricity to an electric grid (7), in which
- values of an operating parameter of the generator (1) and/or of the rotating machine (2) are acquired and stored,
- it is ascertained whether the value of the operating parameter at prescribed checking instants (t₁ - t₅) lies outside an admissible range
**characterized in that**
- a possible fault is inferred if the value of the operating parameter lies outside the admissible range at two directly successive checking instants (t₃, t₄), and it is additionally checked whether the value of the operating parameter is approaching the admissible range in a prescribed checking interval (Δtₚ) that lies between the two directly successive checking instants (t₃, t₄) and, in particular, extends up to the later of the two checking instants (t₄), and
- it is inferred that there is a fault if the value of the operating parameter is not approaching the admissible range.

2. Method according to Claim 1, **characterized in that** checking instants (t₁ - t₅) are considered, between each of which there is a time interval in the range of from 100 to 500 milliseconds, in particular from 100 to 350 milliseconds, preferably from 200 to 300 milliseconds.

3. Method according to Claim 1 or 2, **characterized in that** a checking interval (Δtₚ) is considered whose length corresponds maximally to half, in particular maximally to a quarter, preferably maximally to a tenth, and particularly preferably maximally to a twentieth, of that time interval that is defined by the two directly successive checking instants (t₃, t₄) at which the value of the operating parameter lies outside the admissible range.

4. Method according to any one of the preceding claims, **characterized in that** a checking interval (Δtₚ) is considered, having a length in the range of from 5 to 50 milliseconds, in particular 5 to 30 milliseconds, preferably 5 to 15 milliseconds.

5. Method according to any one of the preceding claims, **characterized in that** the difference between the value of the operating parameter at the later of the two checking instants (t₄) at which the value of the operating parameter lies outside the admissible range and the value of the operating parameter at an additional checking instant (t_{z}), which lies inside the checking interval (Δtₚ), is ascertained, and it is inferred, from the sign of the difference, whether the value of the operating parameter is or is not approaching the admissible range in the checking interval (Δtₚ).

6. Method according to Claim 5, **characterized in that** an additional checking instant (t_{z}) is considered that lies 5 to 50 milliseconds, in particular 5 to 30 milliseconds, preferably 5 to 15 milliseconds, before the later (t₄) of the two directly successive checking instants (t₃, t₄) at which the value of the operating parameter lies outside the admissible range.

7. Method according to Claim 5 or 6, **characterized in that** the amount of the difference between the value of the operating parameter at the later of the two checking instants (t₄) at which the value of the operating parameter lies outside the admissible range and the value of the operating parameter at the additional checking instant (t_{z}), which lies inside the checking interval (Δtₚ), is ascertained, and the amount of the difference is compared with a prescribed maximum value, wherein the presence of a fault is inferred if the amount exceeds the maximum value.

8. Method according to any one of the preceding claims, **characterized in that** a rate of change of the operating parameter in the predefined checking interval (Δtₚ) is determined.

9. Method according to Claim 8, **characterized in that** it is inferred, from the sign of the rate of change of the operating parameter, whether the value of the operating parameter is or is not approaching the admissible range in the checking interval (Δtₚ).

10. Method according to Claim 8 or 9, **characterized in that** it is ascertained whether the value of the rate of change lies inside or outside an admissible range, and a fault is inferred if the value of the rate of change lies outside the admissible range.

11. Method according to any one of the preceding claims, **characterized in that** the power of the generator (1) and/or the rotational speed of the generator (1) are acquired and stored as an operating parameter of the generator (1), and/or in that the torque of the rotating machine (2) is acquired and stored as an operating parameter of the rotating machine (2).

12. Method according to any one of the preceding claims, **characterized in that** the difference between the value of the operating parameter at the later (t₄) of the two directly successive checking instants (t₃, t₄) at which the value of the operating parameter lies outside the admissible range and an operating-parameter reference value is ascertained, and a fault is inferred if the amount of the difference exceeds a prescribed value.

13. Apparatus (8) for monitoring the operation of an electricity generating installation, which comprises at least one generator (1) that is driven by a rotating machine (2) in order to supply electricity to an electric grid (7), in particular for executing the method according to any one of the preceding claims, comprising
- acquisition means (9) that are designed to acquire the value of an operating parameter of the generator (1) and/or of the rotating machine (2), and
- an evaluation device (10) that is designed to receive and to store values of the operating parameter that are transferred by the acquisition means (9), and to ascertain whether the value of the operating parameter at prescribed checking instants (t₁ - t₅) lies inside or outside an admissible range,
**characterized in that** the evaluation device (10) is designed in such a manner that, by means thereof,
- a possible fault is inferred if the value of the operating parameter lies outside the admissible range at two directly successive checking instants (t₃, t₄), and it may additionally be checked whether the value of the operating parameter is approaching the admissible range in a prescribed checking interval (Δtₚ) that lies between the two directly successive checking instants (t₃, t₄) and that, in particular, extends up to the later of the two checking instants (t₄), and
- it is inferred that there is a fault if the value of the operating parameter is not approaching the admissible range.

## Revendications

1. Procédé de contrôle du fonctionnement d'une installation de production d'électricité, qui comprend un alternateur (1) entraîné par une machine (2) tournante pour alimenter en courant un réseau (7) électrique, dans lequel
- on relève et on met en mémoire des valeurs d'un paramètre de fonctionnement de l'alternateur (1) et/ou de la machine (2) tournante,
- on détermine si la valeur du paramètre de fonctionnement à des instants (t₁ à t₅) de contrôle donnés à l'avance se trouve en dehors d'une plage admissible,
**caractérisé en ce que**
- dans le cas où à deux instants (t₃, t₄) de contrôle se succédant immédiatement, la valeur du paramètre de fonctionnement se trouve en dehors de la plage admissible, on en déduit une possibilité de perturbation et on contrôle supplémentairement si la valeur du paramètre de fonctionnement dans un intervalle (Δtₚ) de contrôle donné à l'avance, qui se trouve entre les deux instants (t₃, t₄) de contrôle se succédant immédiatement et qui s'étend notamment jusqu'au plus tardif des deux instants (t₄) de contrôle, se rapproche de la plage admissible, et
- si la valeur du paramètre de fonctionnement ne se rapproche pas du paramètre admissible, on en déduit qu'il y a une perturbation.

2. Procédé suivant la revendication 1, **caractérisé en ce que** l'on considère des instants (t₁ à t₅) de contrôle entre lesquels il y a respectivement un intervalle de temps dans la plage de 100 à 500 millisecondes, notamment de 100 à 350 millisecondes, de préférence de 200 à 300 millisecondes.

3. Procédé suivant la revendication 1 ou 2, **caractérisé en ce que** l'on considère un intervalle (Δtₚ) de contrôle, dont la longueur représente au maximum la moitié, notamment au maximum à un quart, d'une manière préférée au maximum un dixième et d'une manière particulièrement préférée au maximum un vingtième de l'intervalle de temps qui est défini par les deux instants (t₃, t₄) de contrôle se succédant immédiatement, où la valeur du paramètre de fonctionnement se trouve en dehors de la plage admissible.

4. Procédé suivant l'une des revendications précédentes, **caractérisé en ce que** l'on considère l'intervalle (Δtₚ) de contrôle, qui a une longueur dans la plage de 5 à 50 millisecondes, notamment de 5 à 30 millisecondes, de préférence de 5 à 15 millisecondes.

5. Procédé suivant l'une des revendications précédentes, **caractérisé en ce que** l'on détermine la différence entre la valeur du paramètre de fonctionnement au plus tardif des deux instants (t₄) de contrôle, où la valeur du paramètre de fonctionnement se trouve en dehors de la plage admissible, et la valeur du paramètre de fonctionnement à un instant (t_{z}) de contrôle supplémentaire, qui se trouve dans l'intervalle (Δtₚ) de contrôle et on déduit du signe de la différence que la valeur du paramètre de fonctionnement dans l'intervalle (Δtₚ) de contrôle se rapproche de la plage admissible ou ne s'en rapproche pas.

6. Procédé suivant la revendication 5, **caractérisé en ce que** l'on considère un instant (t_{z}) de contrôle supplémentaire, qui se trouve 5 à 50 millisecondes, notamment 5 à 30 millisecondes, de préférence 5 à 15 millisecondes, avant le plus tardif (t₄) des deux instants (t₃, t₄) de contrôle se succédant immédiatement où la valeur du paramètre de fonctionnement se trouve en dehors de la plage admissible.

7. Procédé suivant la revendication 5 ou 6, **caractérisé en ce que** l'on détermine la valeur absolue de la différence entre la valeur du paramètre de fonctionnement au plus tardif des deux instants (t₄) de contrôle, où la valeur du paramètre de fonctionnement se trouve en dehors de la plage admissible, et la valeur du paramètre de fonctionnement à l'instant (t_{z}) supplémentaire, qui se trouve dans l'intervalle (Δtₚ) de contrôle et l'on compare la valeur absolue de la différence à une valeur maximum donnée à l'avance, dans lequel, dans le cas où la valeur absolue de la valeur maximum est dépassée, on en déduit qu'il y a une perturbation.

8. Procédé suivant l'une des revendications précédentes, **caractérisé en ce que** l'on détermine un taux de variation du paramètre de fonctionnement dans l'intervalle (Δtₚ) de contrôle donné à l'avance.

9. Procédé suivant la revendication 8, **caractérisé en ce que** l'on déduit du signe du taux de variation du paramètre de fonctionnement que la valeur du paramètre de fonctionnement dans l'intervalle (Δtₚ) de contrôle se rapproche de la plage admissible ou ne s'en rapproche pas.

10. Procédé suivant la revendication 8 ou 9, **caractérisé en ce que** l'on détermine si la valeur du taux de variation se trouve dans ou en dehors d'une plage admissible et on déduit une perturbation si la valeur du taux de variation se trouve en dehors de la plage admissible.

11. Procédé suivant l'une des revendications précédentes, **caractérisé en ce que** l'on relève et on met en mémoire comme paramètre de fonctionnement de l'alternateur (1) la puissance de l'alternateur (1) et/ou la vitesse de rotation de l'alternateur (1) et/ou **en ce que** l'on relève et on met en mémoire comme paramètre de fonctionnement de la machine (2) tournante le couple de la machine (2) tournante.

12. Procédé suivant l'une des revendications précédentes, **caractérisé en ce que** l'on détermine la différence entre la valeur du paramètre de fonctionnement à l'instant (t₄) le plus tardif des deux instants (t₃, t₄) de contrôle se succédant immédiatement, où la valeur du paramètre de fonctionnement se trouve en dehors de la plage admissible, et une valeur de consigne de paramètre de fonctionnement et on déduit une perturbation si la valeur absolue de la différence dépasse une valeur donnée à l'avance.

13. Installation (8) de contrôle du fonctionnement d'une installation de production d'électricité, qui comprend au moins un alternateur (1) entraîné par une machine (2) tournante pour alimenter en courant un réseau (7) électrique, notamment pour effectuer le procédé suivant l'une des revendications précédentes, comprenant
- des moyens (9) de relevé, qui sont constitués pour relever la valeur d'un paramètre de fonctionnement de l'alternateur et/ou de la machine (2) tournante, et
- un dispositif (10) d'exploitation, qui est constitué pour recevoir et mettre en mémoire des valeurs du paramètre de fonctionnement transmises par les moyens (9) de relevé et pour déterminer si la valeur du paramètre de fonctionnement à des instants (t₁ à t₅) de contrôle donnés à l'avance se trouve dans ou en dehors d'une plage admissible, **caractérisée en ce que** le dispositif (10) d'exploitation est constitué de manière à, par celui-ci
- dans le cas où en deux instants (t₃, t₄) de contrôle se succédant immédiatement la valeur du paramètre de fonctionnement se trouve en dehors de la plage admissible pouvoir déduire une possibilité de perturbation et pouvoir contrôler supplémentairement si la valeur du paramètre de fonctionnement dans un intervalle (Δtₚ) de contrôle donné à l'avance, qui s'étend entre les deux instants (t₃, t₄) de contrôle se succédant immédiatement et qui s'étend notamment jusqu'au plus tardif des deux instants (t₄) de contrôle, se rapproche de la plage admissible, et
- si la valeur du paramètre de fonctionnement se rapproche du paramètre admissible, déduire qu'il y a une perturbation.
